# DEMANDE DE BREVET EUROPEEN

(11) **EP 1 691 145 A2**
(43) Date de publication de la demande: **16.08.2006**
(21) Numéro de dépôt: 05380133.8
(22) Date de dépôt: 17.06.2005
(51) Int. Cl.: F24J 2/54, F24J 2/40

(54) **Installation pour le positionnement automatisé de panneaux capteurs d'énergie solaire**

(30) Priorité: 09.02.2005 ES 200500286
(71) Demandeur: Fernandez Manso, Vincente, 49800 Toro (Mamora) (ES)
(72) Inventeur: Fernandez Manso, Vincente, 49800 Toro (Mamora) (ES)
(74) Mandataire: Urizar Barandiaran, Miguel Angel

(57) **Abrégé**

Installation pour le positionnement automatisé de panneaux capteurs d'énergie solaire, qui comprend une structure mobile porteuse du panneau ou des panneaux solaires et des moyens pour son déplacement par rapport à une colonne fixe (4) suivant les mouvements du soleil.

Ces moyens, aussi bien pour le déplacement de la structure mobile par rapport à la colonne centrale fixe (4) que pour faire varier l'inclinaison du cintre (15) par rapport à la structure mobile, sont à action fluidique et sont commandés par un automate programmable (3).

Applicable aux installations d'énergie solaire.

## Description

La présente invention a pour trait une installation visant le positionnement automatisé de panneaux capteurs d'énergie solaire.

On connaît déjà les collecteurs solaires disposés sur une structure fixe ou, de préférence, mobile (réglable, au moins, en longueur et en latitude) pour que les rayons solaires puissent être utilisables au maximum. Les dossiers U246277, U251976 et P493535, entre autres, en sont des exemples.

Un problème non résolu est l'automatisation de cette régulation/mobilité pour que les rayons solaires tombent toujours sur le collecteur solaire et être ainsi utilisés au maximum.

L'idéal est que le mouvement du panneau collecteur soit constant et qu'il suive la trajectoire du soleil, dont le mouvement est, lui aussi, constant.

L'installation qui fait l'objet de l'invention résout cette limitation en disposant les panneaux capteurs d'énergie solaire sur une structure mobile munie de moyens de medios permettant son déplacement suivant les mouvements du soleil.

Pour mieux comprendre l'objet de la présente invention, on a représenté sur les plans une forme préférentielle de réalisation pratique susceptibles de changements accessoires qui n'en dénaturent pas le fondement.

La figure 1 représente une vue générale schématique de la structure mobile avec tous ses composants disposés pour le montage pour un exemple -non limitatif- de réalisation pratique.

La figure 2 représente une vue partielle de la structure mobile de la figure précédente avec les moyens pour la déplacer autour d'une colonne centrale fixe (4) par rapport à laquelle elle peut tourner.

Dans cet exemple de réalisation, ces moyens ont pour traits particuliers :
- des roues (14) sur les côtés (1a) de la structure mobile ;
- un/des moteur(s) hydraulique(s) (21) associé(s) à, au moins, l'une des roues (14)
- des flexibles connecteurs (22) qui relient chaque moteur hydraulique (21) au groupe hydraulique (20), commandé par un automate programmable (3)
- un/des cylindre(s) hydraulique(s) (23) associé(s) à, au moins, l'un des ciseaux de levage (17)
- des flexibles connecteurs (22') qui relient chaque cylindre hydraulique (23) au gorupe hydraulique (20) commandé par un automate programmable (3).

On décrit ci-dessous un exemple de réalisation pratique, non limitative, de la présente invention.

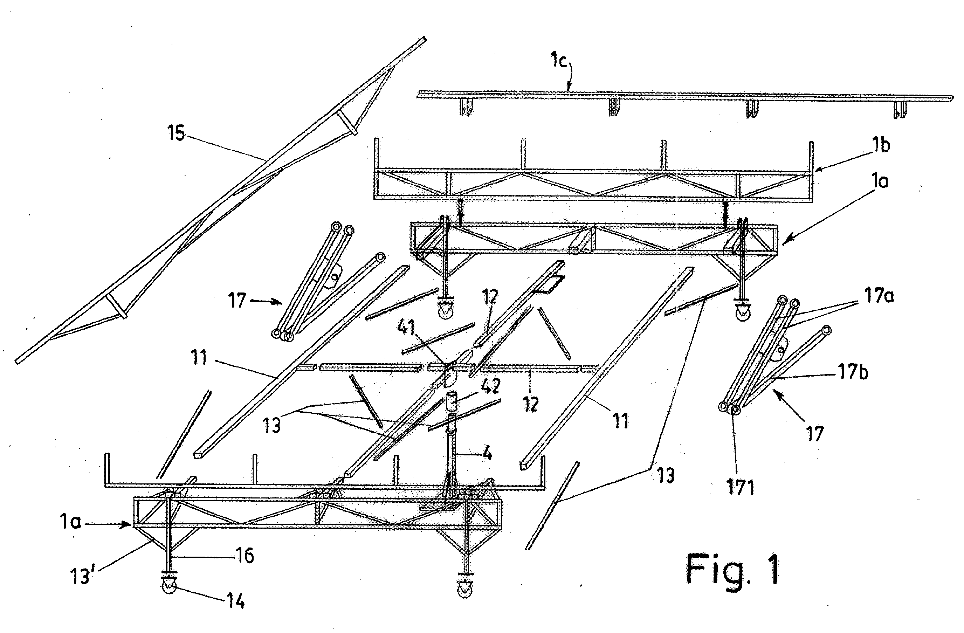

L'objet de l'invention se rapporte à une installation pour le positionnement automatisé de panneaux capteurs d'énergie solaire, dans laquelle un ou plusieurs panneaux solaires ont une disposition inclinée sur un cintre (15) -voir figure 1-.

Conformément à l'invention, ce cintre (15) est disposé sur une structure mobile, constituant avec le panneau solaire un assemblage unitaire.

Conformément à l'invention, cet assemblage unitaire est muni de moyens permettant son déplacement en suivant les mouvements du soleil, afin que les rayons solaires tombent toujours sur les panneaux en étant utilisé au maximum.

À partir de cette conception de base, sont incluses dans l'objet de l'invention les réalisations alternatives quelles qu'elles soient qui n'altèrent, ne changent ou ne modifient pas l'essentialité proposée.

La description suivante, se rapportant aux plans ci-joints, doit être comprise comme un simple exemple de réalisation pratique.

Selon la réalisation représentée, la structure mobile comporte, au moins, deux sous-structures latérales (1a) unies entre elles au moyen de montants extérieurs (11) pour former une armature-bâti porteuse à un ou plusieurs cintres (15) avec des panneaux solaires, cette armature-bâti étant assemblée à sa tour au moyen de montants/traverses intérieurs (12) à une colonne centrale fixe (4). Cette armature-bâti, qui est fixée (13), comporte des roues (14), disposées sur des pieds (16), fixés eux aussi (13'), à la sous structure latérale (1a) correspondante

L'inclinaison des cintres (15) et, par conséquent, celle des panneaux solaires qu'ils supportent, peut être pré-établie en utilisant, par exemple, des ciseaux de levage (17).

Pour ce montage, les ciseaux de levage (17) disposent de bras (17a), (17b) articulés entre eux en (171) et leurs extrémités libres sont raccordées, respectivement, au cintre (15) correspondant et aux montants extérieurs (11) correspondants de la structure mobile. Le repliement/ déploiement des ciseaux de levage (17), en vue de varier l'inclinaison du cintre (15) et, par conséquent, du panneau solaire qui y est monté est atteinte en les associant également aux moyens de déplacement.

Les montants extérieurs (11) relient entre eux les deux sous-structures latérales (1a). L'assemblage est raccordé à la colonne centrale fixe (4) en utilisant des montants/traverses intérieurs (12). Cette liaison utilise deux pièces intermédiaires (41), (42) avec la possibilité de tourner librement l'une par rapport à l'autre: une pièce croisillon (41) est montée sur les montants/traverses (12) et l'autre (42) -frette- est montée sur la colonne fixe (4).

Aussi bien la structure mobile dans son ensemble que les sous-structures latérales (1a), en particulier, qui s'y trouvent, sont fixées (13). Cette structure mobile est complétée, le cas échéant, par des sous-structures complémentaires (1 b), (le) en fonction de chaque nécessité concrète.

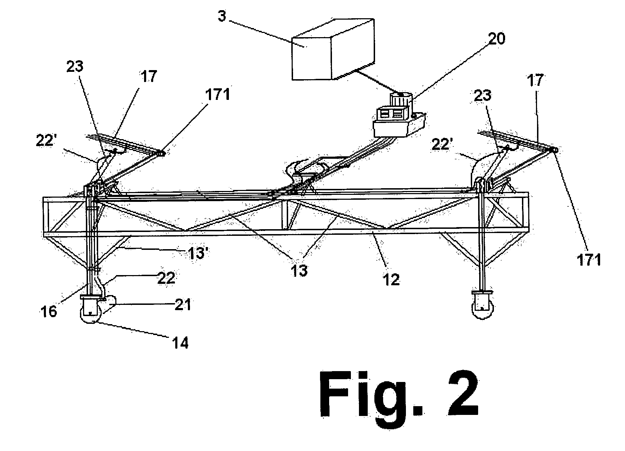

Les sous-structures latérales (1 a) sont munies de pieds (16) à roues (14), ces pieds (16) étant également fixés (13') à la sous-structure (1a) -voir figures 1 et 2-.

Les moyens pour déplacer l'assemblage unitaire décrit ci-dessus sont des moyens d'action fluidique commandés par un automate programmable (3).

Selon la réalisation représentée, ces moyens pour déplacer l'assemblage par rapport à la colonne centrale (4) sont notamment des moteurs hydrauliques (21) associés aux roues (14) -au moins un moteur hydraulique (21) associé à une des roues (14), comme on l'a représenté sur la figure 2-.

Chaque moteur hydraulique (21) associé à une roue (14) est raccordé au groupe hydraulique principal (20) au moyen de flexibles (22) et se déplacent avec la structure mobile.

Selon la réalisation représentée, ces moyens visant à actionner, au moins, l'un des ciseaux de levage (17) et à varier l'inclinaison du/des cintre(s) (15) sont notamment des cylindres hydrauliques (23) associés à cette structure mobile et à, au moins, l'un des bras de ces ciseaux de levage (17).

Chaque cylindre hydraulique (23) associé à des ciseaux de levage (17) est relié à un groupe hydraulique principal (20) au moyen de flexibles (22') et se déplace avec la structure mobile.

Le groupe hydraulique principal (20) commandé par un automate programmable (3) utilisant le logiciel opportun, envoie à chaque moteur hydraulique (21) et à chaque cylindre hydraulique (23) la force nécessaire, à chaque instant, pour que leur action conjointe et synchronisée se traduise par un mouvement automatisé et constant, qui suit la trajectoire du soleil.

## Revendications

1. Installation pour le positionnement automatisé de panneaux capteurs d'énergie solaire, **se caractérisant par le fait que** :
a) elle comprend une structure mobile porteuse du panneau ou des panneaux solaires et des moyens pour son déplacement par rapport à une colonne fixe (4) suivant les mouvements du soleil;
b) cette structure mobile, à son tour, comporte, au moins, un cintre (15) porteur d'au moins un panneau solaire et monté avec l'interposition de ciseau(x) de levage (17) avec des moyens pour en faire varier l'inclinaison par rapport à la structure mobile;
c) ces moyens, aussi bien pour le déplacement de la structure mobile par rapport à la colonne centrale fixe (4) que pour faire varier l'inclinaison du cintre (15) par rapport à la structure mobile sont à action fluidique et sont commandés par un automate programmable (3).

2. Instalation pour le positionnement automatisé de panneaux capteurs d'énergie solaire, selon la revendication antérieure, **se caractérisant par** lefait, notamment, que cette structure mobile comprend :
- deux sous-structures latérales (1a) munies de pieds (16) à roues (14);
- des montant extérieurs (11) qui relient entre elles ces sous-structures latérales (1a)
- des montants/traverses intérieurs (12) qui raccordent cet assemblage unitaire à la colonne centrale (4).

3. Installation pour le positionnement automatisé de panneaux capteurs d'énergie solaire, selon les revendications antérieures, se caractérisant notamment par le fait que ces moyens pour déplacer la structure mobile par rapport à la colonne centrale (4) sont des moteurs hydrauliques (21) associés à, au moins, l'une des roues (14) et en communication au moyen de flexibles (22) avec un groupe hydraulique (20) commandé par un automate programmable (3).

4. Installation pour le positionnement automatisé de panneaux capteurs d'énergie solaire, selon les revendications 1 et 2, se caractérisant notamment par le fait que ces moyens visant à varier l'inclinaison de chaque cintre (15) sont des cylindres hydrauliques (23) associés à cette structure mobile et à, au moins, un des bras (17a) d'un ciseau de levage (17) et en communication au moyen de flexibles (22') avec le groupe hydraulique (20) commandé par un automate programmable (3).
